# EUROPEAN PATENT APPLICATION

(11) **EP 4 361 905 A1**
(43) Date of publication of application: **01.05.2024**
(21) Application number: 23206210.9
(22) Date of filing: 26.10.2023
(51) Int. Cl.: G06N 20/00, G01S 7/41, G01S 13/00, G01S 13/87, G06F 3/01

(54) **ARTIFICIAL INTELLIGENCE (AI)-CHANNEL STATE INFORMATION (CSI) AUTOMATED LABELING METHOD**

(30) Priority: 28.10.2022 US 202263381307 P; 16.10.2023 US 202318487605
(71) Applicant: MediaTek Inc., 30078 Hsinchu City (TW)
(72) Inventor: WANG, Chao-Peng, Hsinchu City (TW); LEE, Chia-Da, Hsinchu City (TW); CHEN, Po-Yu, Hsinchu City (TW); CHIU, Hsiao-Chien, Hsinchu City (TW); LU, Yi-Cheng, Hsinchu City (TW)
(74) Representative: Hoefer & Partner Patentanwälte mbB

(57) **Abstract**

Aspects of the present disclosure provide an automated labeling system (300). For example, the automated labeling system (300) can include an automated labeling module, ALM, (310) configured to receive wireless signals and ground truth of learning object and label the wireless signals with the ground truth when receiving the ground truth to generate labeled training data. The automated labeling system (300) can also include a training database (320) coupled to the ALM (310). The training database (320) can be configured to store the labeled training data.

## Description

### CROSS-REFERENCE TO RELATED APPLICATIONS

This present disclosure claims the benefit of U.S. Provisional Application No. 63/381,307, "AI-CSI Automated Labeling Method for Device Training" filed on October 28, 2022, which is incorporated herein by reference in its entirety.

### TECHNICAL FIELD

The present disclosure relates to artificial intelligence (AI) models, and, more particularly, to data labeling for training AI models.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Data samples may be assigned with labels, and the pairs of the data samples and the corresponding labels can be used to train artificial intelligence (AI) models with supervised learning algorithms.

### SUMMARY

An automated labelling system according to the invention is defined in independent claim 1. The dependent claims define preferred embodiments thereof. Aspects of the present disclosure provide an automated labeling system. For example, the automated labeling system can include an automated labeling module (ALM) configured to receive wireless signals and ground truth of learning object and label the wireless signals with the ground truth when receiving the ground truth to generate labeled training data. The automated labeling system can also include a training database coupled to the ALM. The training database can be configured to store the labeled training data.

For example, the wireless signals can include Wi-Fi signals. As another example, the Wi-Fi signals can include channel state information (CSI) signals.

Preferably, the automated labeling system can also further include an artificial intelligence (AI) model that is trained with the labeled training data. The trained AI model can be configured to make prediction on wireless signals that are newly received. For example, the AI model can be trained by a cloud server or a device that includes the automated labeling system.

Preferably, the automated labeling system can further include a ground truth providing device coupled to the ALM. The ground truth providing device can be configured to provide the ground truth to the ALM. For example, the trained AI model can be further configured to control an operation of the ground truth providing device.

Preferably, the ground truth providing device can include a camera and a gesture recognition module coupled to the camera and the ALM. The camera can be configured to capture images that indicate a user's gestures. The gesture recognition module can be configured to interpret the captured image as commands and send gesture category of the interpreted gestures to the ALM as the ground truth. For example, the automated labeling system can be included in a virtual reality device.

Preferably, the ground truth providing device can include an inertial measurement unit (IMU) sensor and a gesture recognition module coupled to the IMU sensor and the ALM. The IMU sensor can be configured to measure and report a body's movements and send IMU data to the gesture recognition module. The gesture recognition module can be configured to interpret the body's movements based on the IMU data and send gesture category of the body's movements to the ALM as the ground truth. For example, the automated labeling system can be included in a gesture-controllable TV.

Preferably, the ground truth providing device can include a Bluetooth (BT) signal source and at least one beacon coupled to the BT signal source and the ALM. The beacon can be configured to broadcast its identifier. The BT signal source can be configured to determine range data based on BT received signal strength indicator (RSSI) signals and send the range data to the ALM as the ground truth. For example, the automated labeling system can be applied to voice activity detection.

Preferably, the ground truth providing device can include at least one beacon, a BT chip, and an indoor positioning module coupled to the BT chip and the ALM. The beacon can be configured to broadcast its identifier. The BT chip can be configured to measure an amplitude of a BT RSSI signal of the identifier and generate and send location data to the ALM as the ground truth. For example, the automated labeling system can be included in a smart phone.

Preferably, the ground truth providing device can include a camera and an object detection module coupled to the camera and the ALM. The camera can be configured to capture images of a surveillance zone. The object detection module can be configured to analyze the captured images and send a detection result to the ALM as the ground truth. The detection result can indicate whether an object enters the surveillance zone. For example, the automated labeling system can be included in a Webcam or a light bulb camera.

Preferably, the ground truth providing device can include an induction module coupled to the ALM. The induction module can be configured to detect an event and generate and send detection data to the ALM as the ground truth. For example, the induction module can include an infrared, a sound sensor and/or a photoresistor, and the event can include an object entering an induction range of the induction module and/or a sound being made in the induction range. As another example, the automated labeling system can be included in an induction lamp.

Note that this summary section does not specify every embodiment and/or incrementally novel aspect of the present disclosure or claimed invention. Instead, this summary only provides a preliminary discussion of different embodiments and corresponding points of novelty over conventional techniques. For additional details and/or possible perspectives of the present disclosure and embodiments, the reader is directed to the Detailed Description section and corresponding figures of the present disclosure as further discussed below.

### BRIEF DESCRIPTION OF THE DRAWINGS

Various embodiments of this disclosure that are proposed as examples will be described in detail with reference to the following figures, wherein like numerals reference like elements, and wherein:
FIG. 1 shows a legacy 802.11a Wi-Fi frame without HT-SIG header, an 802.11n frame that includes a legacy signal field and an HT-SIG field for backwards compatibility, and CSI signals having amplitudes that change at different locations;
FIG. 2 shows a flow diagram of a conventional process for developing an AI model;
FIG. 3 shows a functional block diagram of an exemplary automated labeling system according to some embodiments of the present disclosure;
FIG. 4 shows a flow diagram of an exemplary process for developing an AI model according to some embodiments of the present disclosure;
FIG. 5 shows a functional block diagram of a first application of an automated labeling system according to some embodiments of the present disclosure;
FIG. 6 shows a flow diagram of an exemplary process for developing or calibrating an AI model in the first application according to some embodiments of the present disclosure;
FIG. 7 shows a functional block diagram of a second application of an automated labeling system according to some embodiments of the present disclosure;
FIG. 8 shows a flow diagram of an exemplary process for developing or calibrating an AI model in the second application according to some embodiments of the present disclosure;
FIG. 9 shows a functional block diagram of a third application of an automated labeling system according to some embodiments of the present disclosure;
FIG. 10 shows a flow diagram of an exemplary process for developing or calibrating an AI model in the third application according to some embodiments of the present disclosure;
FIG. 11 shows a functional block diagram of a fourth application of an automated labeling system according to some embodiments of the present disclosure;
FIG. 12 shows a flow diagram of an exemplary process for developing or building an AI model in the second application according to some embodiments of the present disclosure;
FIG. 13 shows a functional block diagram of a fifth application of an automated labeling system according to some embodiments of the present disclosure;
FIG. 14 shows a flow diagram of an exemplary process for developing or building an AI model in the fifth application according to some embodiments of the present disclosure;
FIG. 15 shows a functional block diagram of a sixth application of an automated labeling system according to some embodiments of the present disclosure;
FIG. 16 shows a flow diagram of an exemplary process for developing or building an AI model in the sixth application according to some embodiments of the present disclosure; and
FIG. 17 shows a functional block diagram of a seventh application of an automated labeling system according to some embodiments of the present disclosure.

### DETAILED DESCRIPTION OF EMBODIMENTS

Machine learning, an approach to achieve artificial intelligence (Al), can be categorized into supervised and unsupervised types, which differ in the way AI models, e.g., deep neural networks (DNNs) such as convolutional neural networks (CNN), are trained and the condition of the training data that are required. Specifically, supervised machine learning requires labeled input and output data during the training phase of the AI models. The AI models, once having learned the relationship between the input and output data, can be used to classify new and unseen datasets and predict outcomes.

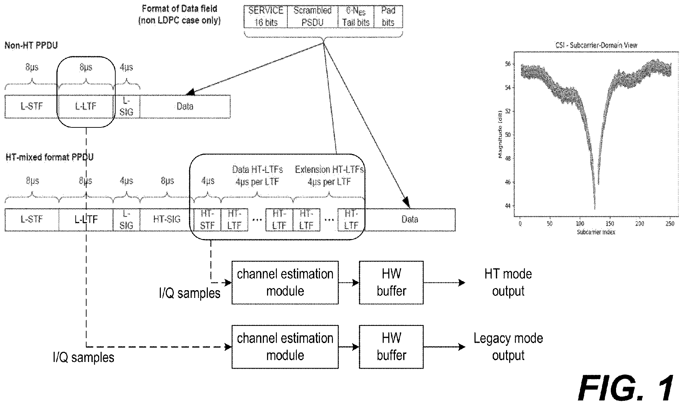

In order to relieve people from the burden of carrying electronic devices, localization (or positioning, such as indoor localization) techniques, *e.g.,* Device-free Passive (DfP) localization systems, have been developed and deployed. DfP localization systems can collect fingerprints that associate human locations with certain propagation characteristics of wireless signals, *e.g.,* Wi-Fi propagation characteristics such as channel state information (CSI) or received signal strength indicator (RSSI), as the amplitudes of these Wi-Fi signals are different when a user is moving to different locations or is standing still but making different gestures with his hands. FIG. 1 shows a legacy 802.11a Wi-Fi frame without HT-SIG header, an 802.11n frame that includes a legacy signal field and an HT-SIG field for backwards compatibility, and CSI signals having amplitudes that change at different locations. By training AI models, *e.g.,* location classifiers/regressors, with these collected fingerprints, *i.e.,* the labeled training data, DfP localization systems can achieve a sub-meter-level location resolution. To label Wi-Fi CSI readings (or data), the readings need to be associated with the ground truth locations (or gestures), *i.e.,* the locations where a user is standing or the gestures that the user is making, when the readings were collected.

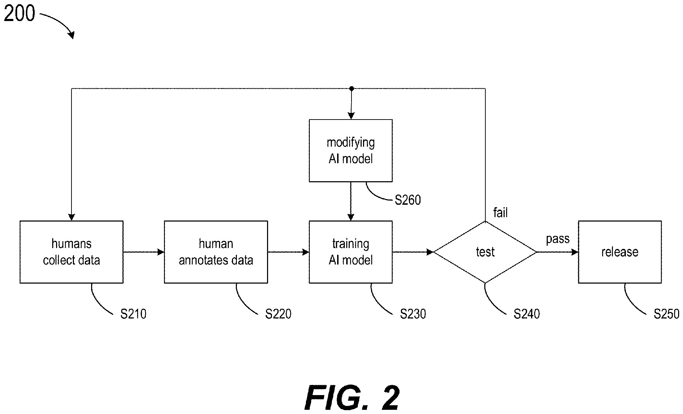

FIG. 2 shows a flow diagram of a conventional process 200 for developing an AI model. In the process 200, humans collect data (at step S210) and annotate (or label) the collected data manually (at step S220). For example, a user can use a wireless receiver to collect a lot of CSI data while moving or standing still but making different gestures, and label the collected CSI data manually with these ground truth of locations and gestures as labeled training data. The labeled CSI data can be used to train an AI model (at step S230). The trained AI model can be tested (at step S240) to determine if it is trained well enough to make accurate predictions. For example, the trained AI model can be tested with test data, which can also be obtained at steps S210 and S220, for example. If the trained AI model passes the test, it can be released for inference use (at step S250); otherwise, it needs to be modified (at step S260) and retrained with newly collected and labeled CSI data (at steps S210 and S220). It is labor-intensive and costly to manually label the lot of CSI data.

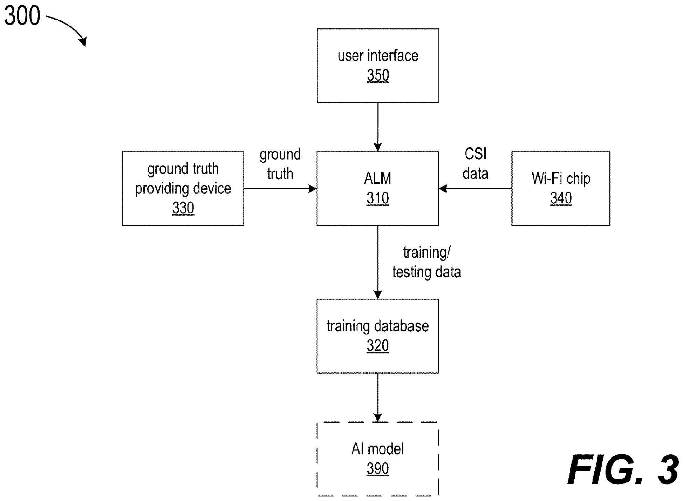

Aspects of the present disclosure provide an automated labeling architecture to automatically label a lot of CSI data, through the use of a ground truth providing device. FIG. 3 shows a functional block diagram of an exemplary automated labeling system 300 according to some embodiments of the present disclosure. In an embodiment, the automated labeling system 300 can include an automated labeling module (ALM) 310 and a training (or training/testing) database 320 coupled to the ALM 310. The ALM 310 can be implemented by hardware such as a processor or software such as an app. The ALM 310 can be configured to label wireless signals, *e.g.,* CSI signals or data, with ground truth of learning objects and generate labeled training (or training/testing) data. The training database 320 can be configured to store the labeled training data generated by the ALM 310. The labeled training data can be used to train an AI model 390. The AI model 390 can be trained in a cloud server or an edge device. Preferably, the automated labeling system 300 can further include a ground truth providing device 330 and a wireless signal source 340 *(e.g.,* a Wi-Fi chip), both of which are coupled to the ALM 310. The ground truth providing device 330 can be configured to provide ground truth by learning objects of AI, e.g., locations and gestures of a user. The wireless signal source can be configured to emit wireless signals. For example, the Wi-Fi chip 340 can be configured to emit Wi-Fi signals, *e.g.,* CSI signals or data. When the ground truth providing device 330 learns an object and generates a corresponding ground truth, the ALM 310 labels the CSI data it is receiving currently with the ground truth and generates labeled training data.

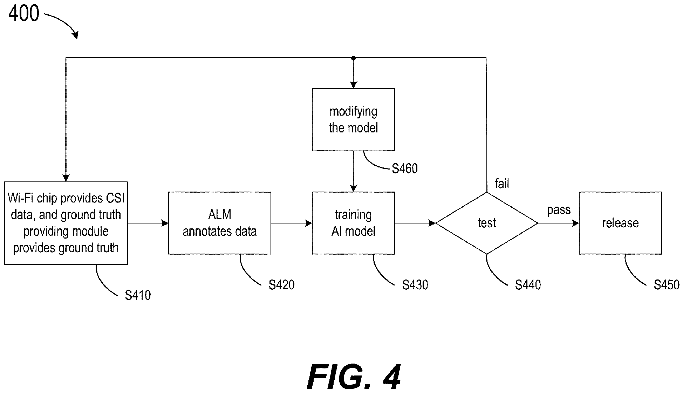

FIG. 4 shows a flow diagram of an exemplary process 400 for developing an AI model according to some embodiments of the present disclosure. Aspects of the process 400 can be implemented by an automated labeling system, e.g., the automated labeling system 300. For example, in the process 400, the Wi-Fi chip 340 can emit wireless signals (e.g., CSI data) in an environment, the ground truth providing device 330 can learn objects in the environment and generate corresponding ground truth, and the ALM 310 can receive the CSI data and the ground truth (at step S410); and the ALM 310 can label the CSI data with the ground truth and generate labeled training data (at step S420). The labeled training data can be stored in the training database 320, and be used to train the AI model 390 (at step S430). The trained AI model 390 can be tested (at step S440) to determine if it is trained well enough to make accurate predictions. For example, the trained AI model 390 can be tested with test data, which can also be obtained at steps S410 and S420, for example. If the trained AI model 390 passes the test, it can be released for inference use (at step S450); otherwise, it needs to be modified (at step S460) and retrained with newly collected and labeled CSI data output from the ALM 310 (at steps S410 and S420). Preferably, as shown in FIG. 3, the automated labeling system 300 can further include a user interface 350 coupled to the ALM 310. The user interface 350 can receive a user's feedback (or input) to trigger the ALM 310 and/or the ground truth providing device 330 and the Wi-Fi chip 340 to perform step S420 and/or step S410, respectively. For example, the user interface 350 can include a graphical user interface (GUI) on a display panel, a voice-controlled user interface to receive a user's voice commands, or other means for receiving a user's input regarding the accuracy of the training AI model 390.

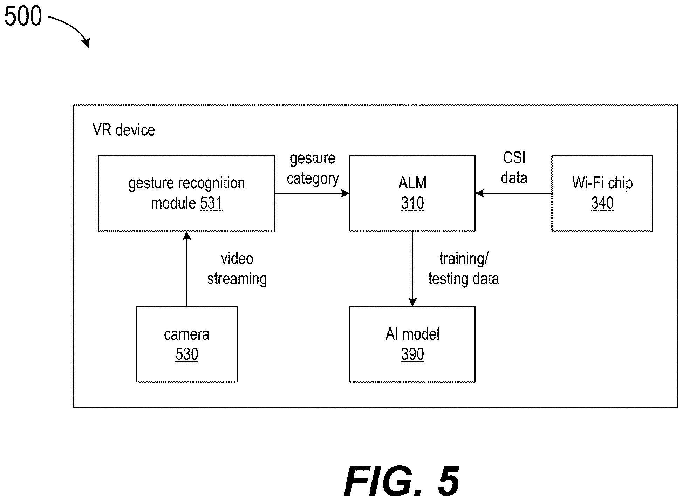

FIG. 5 shows a functional block diagram of a first application, e.g., a virtual reality (VR) device 500, of an automated labeling system, *e.g.,* the automated labeling system 300, according to some embodiments of the present disclosure. The VR device 500 can track a user's hand (and finger) gestures (or movements) using a lighthouse tracking system, an inside-out tracking system, *etc.* In an embodiment, the VR device 500 can include the ALM 310 and the Wi-Fi chip 340. Preferably, the VR device 500 can further include the training database 320 and the user interface 350. In the VR device 500, a camera 530 and a gesture recognition module 531 coupled to the camera 530 can collectively act as the ground truth providing device 330. The camera 530, which can be located on a headset of the VR device 500, can detect infrared (IR) light, for example, continuously capture images of them, which may indicate a user's hand gestures, for example, and send a video stream of the captured images to the gesture recognition module 531. The gesture recognition module 531 can interpret the hand gestures as commands, and send the gesture category of the interpreted hand gestures to the ALM 310 as the ground truth. Accordingly, the ALM 310 can label the CSI data received from the Wi-Fi chip 340 with the gesture category received from the gesture recognition module 531 to generate labeled training data (which correspond to different commands), which can be used to train the AI model 390. Therefore, the AI model 390 thus trained with the labeled CSI data can be used to make prediction on newly received CSI data that correspond to the user's hand gestures and issue corresponding commands, without the need to use the camera 530 to capture the images of the user's hand gestures and the gesture recognition module 531 to interpret the hand gestures.

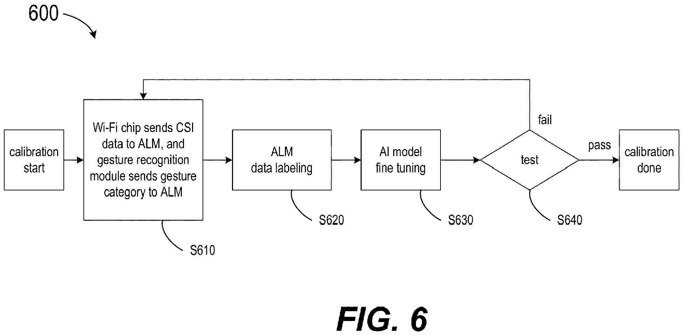

FIG. 6 shows a flow diagram of an exemplary process 600 for developing or calibrating an AI model according to some embodiments of the present disclosure. Aspects of the process 600 can be implemented by an application of an automated labeling system, *e.g.,* the VR device 500. For example, in the process 600, the Wi-Fi chip 340 can emit wireless signals (*e.g.,* CSI data) in an environment, the user interface 350 can instruct a user in the environment to make some specific hand or finger gestures (*e.g.,* thumbing up, giving the V-sign, waving hands, *etc*.), which may correspond to different commands, the camera 530 can capture images of the hand gestures and send a video stream of the captured images to the gesture recognition module 531, the gesture recognition module 531 can learn objects (*e.g.,* the hand gestures) in the environment and generate corresponding ground truth (*e.g.,* the gesture category), and the ALM 310 can receive the CSI data received from the Wi-Fi chip 340 and the gesture category received from the gesture recognition module 531 (at step S610); and the ALM 310 can label the CSI data with the gesture category and generate labeled training data (at step S620). The labeled training data can be stored in the training database 320, and be used to train the AI model 390 (at step S630). The trained AI model 390 can be tested (at step S640) to determine if it is trained or tuned well enough to make accurate predictions. For example, the trained AI model 390 can be tested with test data, which can also be obtained at steps S610 and S620, for example. If the trained AI model 390 passes the test, the calibration is done; otherwise, it needs to be modified and retrained with newly collected and labeled CSI data from the ALM 310 (at steps S610 and S620). Preferably, the user interface 350 can receive a user's feedback (or input) to trigger the ALM 310 and/or the camera 530, the gesture recognition module 531 and the Wi-Fi chip 340 to perform step S620 and/or step S610, respectively.

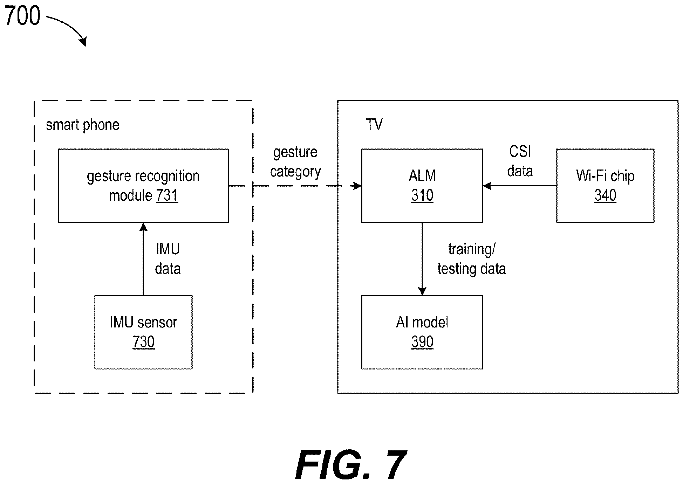

FIG. 7 shows a functional block diagram of a second application, e.g., a gesture-controllable TV 700, of an automated labeling system, e.g., the automated labeling system 300, according to some embodiments of the present disclosure. The gesture-controllable TV 700 can track a user's hand gestures (or movements) in accordance with inertial measurement unit (IMU) (or inertial and magnetic measurement unit (IMMU)) data provided by a mobile device (*e.g.,* a smart phone), a wearable device (*e.g.,* an IMU ring), *etc.* In an embodiment, the gesture-controllable TV 700 can include the ALM 310 and the Wi-Fi chip 340. Preferably, the gesture-controllable TV 700 can further include the training database 320 and the user interface 350. A smart phone can include an IMU (or IMMU) sensor 730 and a gesture recognition module 731 that are coupled to each other and can collectively act as the ground truth providing device 330. The IMU sensor 730 can measure and report a body's specific force, angular rate (or movements or gestures) and sometimes the orientation of the body (*e.g.,* a user whose hand holds the smart phone waving his hand up and down or left and right) using a combination of accelerometers, gyroscopes and sometimes magnetometers, and send IMU data to the gesture recognition module 731. The gesture recognition module 731 can interpret the hand waving (the body's movements) as commands based on the IMU data, and send the gesture category of the interpreted hand waving to the ALM 310 as the ground truth. Accordingly, the ALM 310 can label the CSI data received from the Wi-Fi chip 340 with the gesture category received from the gesture recognition module 731 to generate labeled training data, which can be used to train the AI model 390. Therefore, the AI model 390 thus trained with the labeled CSI data can be used to make prediction on newly received CSI data that correspond to the user's hand waving and issue corresponding commands, without the need to use the smart phone to generate IMU data, interpret hand waving, and generate gesture category.

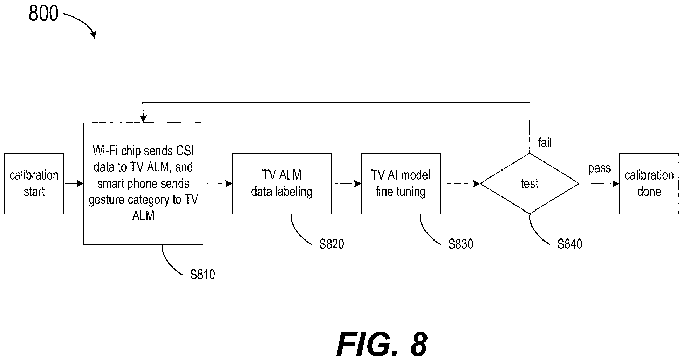

FIG. 8 shows a flow diagram of an exemplary process 800 for developing or calibrating an AI model according to some embodiments of the present disclosure. Aspects of the process 800 can be implemented by an application of an automated labeling system, *e.g.,* the gestured-controllable TV 700. For example, in the process 800, the Wi-Fi chip 340 can emit wireless signals *(e.g.,* CSI data) in an environment, the user interface 350 can instruct a user to make some certain hand or finger gestures, *e.g.,* waving up and down or left and right a hand that holds the smart phone, *etc.,* which may correspond to different commands, the IMU sensor 730 can measure and report a body's specific force, angular rate and sometimes the orientation of the body (*e.g.,* the hand waving his hand up and down or left and right) and send IMU data to the gesture recognition module 731, the gesture recognition module 731 can learn objects (*e.g.,* the hand waving) in the environment and generate corresponding ground truth (*e.g.,* the gesture category), and the ALM 310 can receive the CSI data from the Wi-Fi chip 340 and the gesture category from the gesture recognition module 731 (at step S810); and the ALM 310 can label the CSI data with the gesture category and generate labeled training data (at step S820). The labeled training data can be stored in the training database 320, and be used to train the AI model 390 (at step S830). The trained AI model 390 can be tested (at step S840) to determine if it is trained or tuned well enough to make accurate predictions. For example, the trained AI model 390 can be tested with test data, which can also be obtained at steps S810 and S820, for example. If the trained AI model 390 passes the test, the calibration is done; otherwise, it needs to be modified and retrained with newly collected and labeled CSI data from the ALM 310 (at steps S810 and S820). Preferably, the user interface 350 can receive a user's feedback (or input) to trigger the ALM 310 and/or the smart phone and the Wi-Fi chip 340 to perform step S820 and/or step S810, respectively.

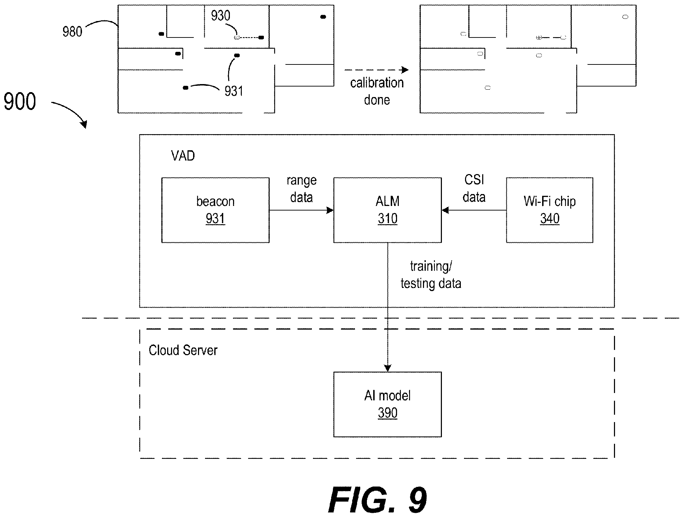

FIG. 9 shows a functional block diagram of a third application, *e.g.,* a voice activity detection (VAD) 900, of an automated labeling system, *e.g.,* the automated labeling system 300, according to some embodiments of the present disclosure. The VAD 900 (also known as speech activity detection or speech detection) can be used to detect presence or absence of human speech in an environment such as a room 980 with a plurality of beacons 931, *e.g.,* iBeacon, Echo Dot, *etc.,* deployed therein. In an embodiment, the VAD 900 can include the ALM 310, the Wi-Fi chip 340 and the beacons 931. Preferably, the VAD 900 can further include the training database 320 and the user interface 350. The beacons 931 are based on Bluetooth (BT) low energy proximity sensing by broadcasting their universally unique identifiers, and a smart phone (or a BT ring) 930 that a user carries who moves in the room 980 can pick up the identifiers, and the range data of the smart phone 930 can be determined based on BT RSSI signals. Preferably, the beacons 931 and the smart phone 930 can collectively act as the ground truth providing device 330. Accordingly, the ALM 310 can label the CSI data received from the Wi-Fi chip 340 with the ground truth (*i.e*., the range data or the amplitudes of the RSSI signals) received from the beacons 931 to generate labeled training data, which can be used to train the AI model 390. Therefore, the AI model 390 thus trained with the labeled CSI data can be used to make prediction on newly received CSI data that correspond to the user's proximity to the beacons 931 and issue corresponding commands, without the need to use the smart phone 930 to pick up the identifiers and the beacons 931 to determine the range data.

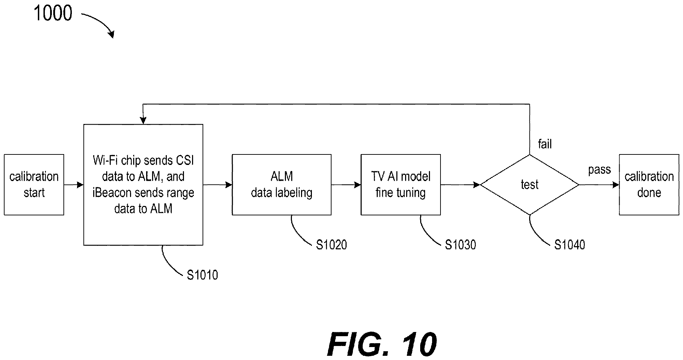

FIG. 10 shows a flow diagram of an exemplary process 1000 for developing or calibrating an AI model according to some embodiments of the present disclosure. Aspects of the process 1000 can be implemented by an application of an automated labeling system, *e.g.,* the VAD 900. For example, in the process 1000, the Wi-Fi chip 340 can emit wireless signals (*e.g.,* CSI data) in an environment, the beacons 931 can broadcast their identifiers and determine and send the ground truth of range data to the ALM 310 (at step S1010); and the ALM 310 can label the CSI data received from the Wi-Fi chip 340 with the range data received from the beacons 931 and generate labeled training data (at step S1020). The labeled training data can be stored in the training database 320, and be used to training the AI model 390 (at step S1030). The trained AI model 390 can be tested (at step S1040) to determine if it is trained or tuned well enough to make accurate predictions. For example, the trained AI model 390 can be tested with test data, which can also be obtained at steps S1010 and S1020, for example. If the trained AI model 390 passes the test, the calibration is done; otherwise, it needs to be modified and retrained with newly collected and labeled CSI data from the ALM 310 (at steps S1010 and S1020). Preferably, the user interface 350 can receive a user's feedback (or input) to trigger the ALM 310 and/or the smart phone 930, the beacons 931 and the Wi-Fi chip 340 to perform step S1020 and/or step S1010, respectively.

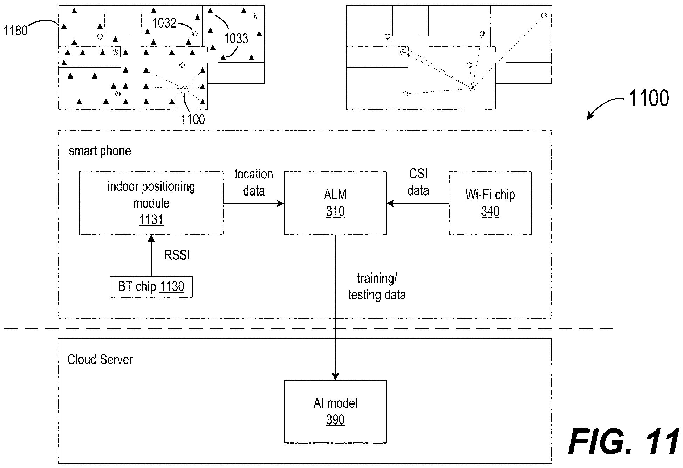

FIG. 11 shows a functional block diagram of a fourth application, *e.g.,* an indoor positioning building 1100, of an automated labeling system, *e.g.,* the automated labeling system 300, according to some embodiments of the present disclosure. The indoor positioning building 1100 can be used to position an object moving in an environment such as a room 1180 with a plurality of access points (APs) 1032 and beacons 1033, *e.g.,* iBeacon, deployed therein. In an embodiment, the indoor positioning building 1100 can be implemented in a smart phone and include the ALM 310 and the Wi-Fi chip 340. Preferably, the indoor positioning building 1100 can further include the training database 320 and the user interface 350. Preferably, the indoor positioning building 1100 can further include a Bluetooth (BT) chip 1130 and an indoor positioning module 1131 coupled to the BT chip 1130 and the ALM 310. The BT chip 1130 can be implemented in a mobile device *(e.g.,* a smart phone), a wearable device *(e.g.,* a BT ring), *etc.* The beacons 1133 can help the smart phone 1100 to determine its approximate location or context. For example, the beacons 1133 can broadcast their identifiers, and the smart phone 1100 can use the BT chip 1130 to measure the amplitudes of BT RSSI signals of the identifiers and use the indoor positioning module 1131 to triangulate and determine its relative location with respect to the beacons 1133 and thus its physical location with respect to the room 1180. Preferably, the BT chip 1130 and the indoor positioning module 1131 can collectively act as the ground truth providing device 330. Accordingly, the ALM 310 can label the CSI data received from the Wi-Fi chip 340 with the ground truth *(i.e.,* the location data) to generate labeled training data, which can be used to train the AI model 390. Therefore, the AI model 390 thus trained with the labeled CSI data can be used to make prediction on newly received CSI data that correspond to the user's location with respect to the room 1180, without the need to use the beacons 1033 to broadcast their identifiers, the BT chip 1130 to measure the amplitudes of the BT RSSI signals, and the indoor positioning module 1131 to determine the location data.

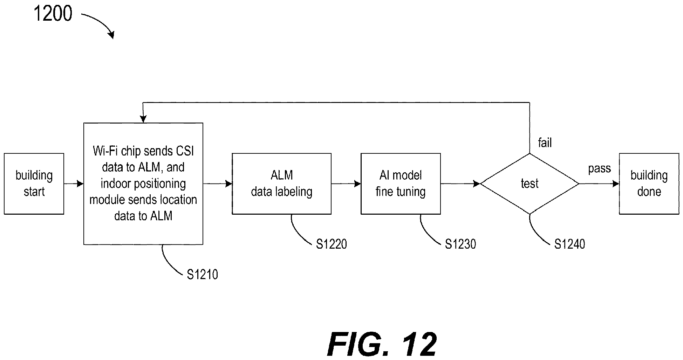

FIG. 12 shows a flow diagram of an exemplary process 1200 for developing or building an AI model according to some embodiments of the present disclosure. Aspects of the process 1200 can be implemented by an application of an automated labeling system, *e.g.,* the indoor positioning building 1100. For example, in the process 1200, the Wi-Fi chip 340 can emit wireless signals *(e.g.,* CSI data) in an environment, the beacons 1033 can broadcast their identifiers in the environment, the BT chip 1130 can measure the amplitudes of BT RSSI signals of the identifiers, and the indoor positioning module 1131 can determine a relative location of the smart phone 1100 with respect to the beacons 1133 and a physical location of the smart phone 1100 with respect to the room 1180 and send the ground truth (*i.e.,* location data) to the ALM 310 (at step S1210); and the ALM 310 can label the CSI data received from the Wi-Fi chip 340 with the location data received from the indoor positioning module 1131 and generate labeled training data (at step S1220). The labeled training data can be stored in the training database 320, and be used to train the AI model 390 (at step S1230). The trained AI model 390 can be tested (at step S1240) to determine if it is trained or tuned well enough to make accurate predictions. For example, the trained AI model 390 can be tested with test data, which can also be obtained at steps S1210 and S1220, for example. If the trained AI model 390 passes the test, the indoor positioning building is done; otherwise, it needs to be modified and retrained with newly collected and labeled CSI data from the ALM 310 (at steps S1210 and S1220). Preferably, the user interface 350 can receive a user's feedback (or input) to trigger the ALM 310 and/or the BT chip 1130, the indoor positioning module 1131, the beacons 1033 and the Wi-Fi chip 340 to perform step S1220 and/or step S1210, respectively.

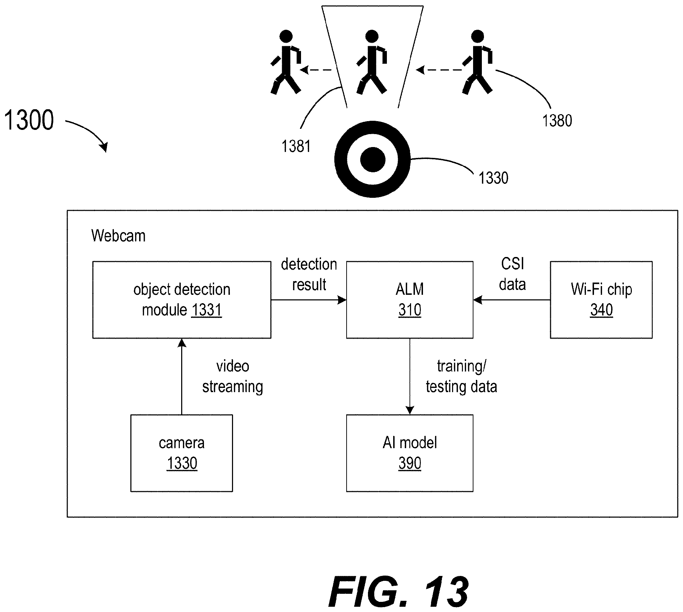

FIG. 13 shows a functional block diagram of a fifth application, e.g., a Webcam (or a light bulb camera) 1300, of an automated labeling system, e.g., the automated labeling system 300, according to some embodiments of the present disclosure. The Webcam 1300 can be used to record or stream to a computer or computer network for surveillance and security use, for example. In an embodiment, the Webcam 1300 can include the ALM 310 and the Wi-Fi chip 340. Preferably, the Webcam 1300 can further include the training database 320 and the user interface 350. Preferably, the Webcam 1300 can further include a camera 1030 and an object detection module 1331 coupled to the camera 1330 and the ALM 310. The camera 1030, which can be located indoors or outdoors, can continuously capture images of a surveillance zone 1381 and send a video stream of the captured images to the object detection module 1331. The object detection module 1331 can analyze the captured images to detect whether there is any object 1380 entering the surveillance zone 1381 and send a corresponding detection result to the ALM 310 as the ground truth. Accordingly, the ALM 310 can label the CSI data received from the Wi-Fi chip 340 with the ground truth *(i.e.,* the detection result) received from the object detection module 1331 to generate labeled training data, which can be used to train the AI model 390. Therefore, the AI model 390 thus trained can be used to make prediction on newly received CSI data that correspond to whether there is any object 1380 entering the surveillance zone 1381, without the need to use the camera 1330 to capture the images of the surveillance zone 1381 and the object detection module 1331 to determine whether there is any object 1380 entering the surveillance zone 1381. Even when the Webcam 1300 is in a standby mode (or a low-power mode) or is blind (specifically, the camera 1330 is blind), the trained AI model 390 can still make prediction solely based on newly received CSI data.

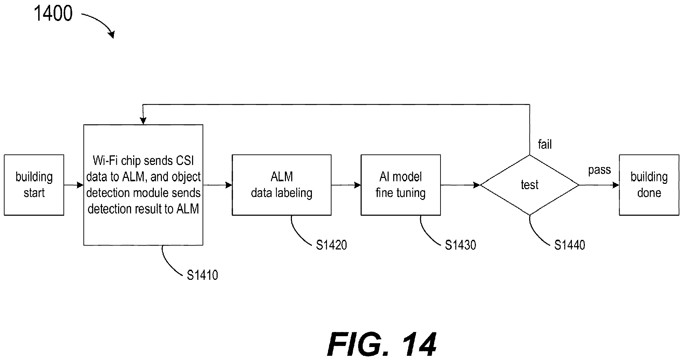

FIG. 14 shows a flow diagram of an exemplary process 1400 for developing or building an AI model according to some embodiments of the present disclosure. Aspects of the process 1400 can be implemented by an application of an automated labeling system, *e.g.,* the Webcam (or the light bulb camera) 1300. For example, in the process 1400, the Wi-Fi chip 340 can emit wireless signals *(e.g.,* CSI data) in an environment *(e.g.,* the surveillance zone 1381), the camera 1330 can capture images of the surveillance zone 1381 and send a video stream of the captured images to the object detection module 1331, the object detection module 1331 can analyze the captured images to detect whether there is any object 1380 entering the surveillance zone 1381 and send a corresponding detection result to the ALM 310 as the ground truth, and the ALM 310 can receive the CSI data and the gesture category (at step S1410); and the ALM 310 can label the CSI data received from the Wi-Fi chip 340 with the detection result received from the object detection module 1331 and generate labeled training data (at step S1420). The labeled training data can be stored in the training database 320, and be used to train the AI model 390 (at step S1430). The trained AI model 390 can be tested (at step S1440) to determine if it is trained or tuned well enough to make accurate predictions. For example, the trained AI model 390 can be tested with test data, which can also be obtained at steps S1410 and S1420, for example. If the trained AI model 390 passes the test, the building is done; otherwise, it needs to be modified and retrained with newly collected and labeled CSI data from the ALM 310 (at steps S1410 and S1420). Preferably, the user interface 350 can receive a user's feedback (or input) to trigger the ALM 310 and/or the camera 1330, the object detection module 1331, and the Wi-Fi chip 340 to perform step S1420 and/or step S1410, respectively.

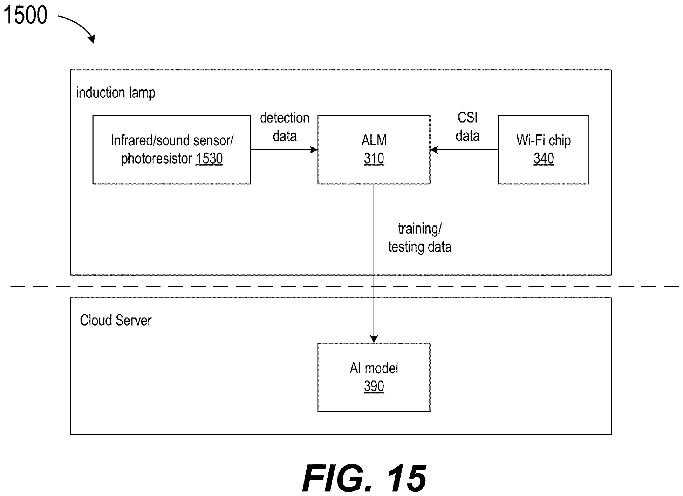

FIG. 15 shows a functional block diagram of a sixth application, *e.g.,* an induction lamp 1500, of an automated labeling system, e.g., the automated labeling system 300, according to some embodiments of the present disclosure. The induction lamp 1500 can work in different modes, *e.g.,* standby mode and on mode, by determining whether an object enters an induction range or whether sounds are made in the induction range. In an embodiment, the induction lamp 1500 can include the ALM 310 and the Wi-Fi chip 340. Preferably, the induction lamp 1500 can further include the training database 320 and the user interface 350. Preferably, the induction lamp 1500 can further include an induction module, *e.g.,* an infrared/sound sensor/photoresistor, that is coupled to the ALM 310. The infrared/sound sensor/photoresistor 1530 can detect any event, *e.g.,* an object that enters and any sound that is made in the induction range, and generate detection data as ground truth. Preferably, the infrared/sound sensor/photoresistor 1530 can act as the ground truth providing device 330. Accordingly, the ALM 310 can label the CSI data received from the Wi-Fi chip 340 with the ground truth *(i.e.,* the detection data) received from the infrared/sound sensor/photoresistor 1530 to generate labeled training data, which can be used to train the AI model 390. Therefore, the AI model 390 thus trained with the labeled CSI data can be used to make prediction on newly received CSI data that correspond to whether any object enters or any sound is made in the induction range, without the need to use the infrared/sound sensor/photoresistor 1530 to detect any object that moves and any sound made in the induction range.

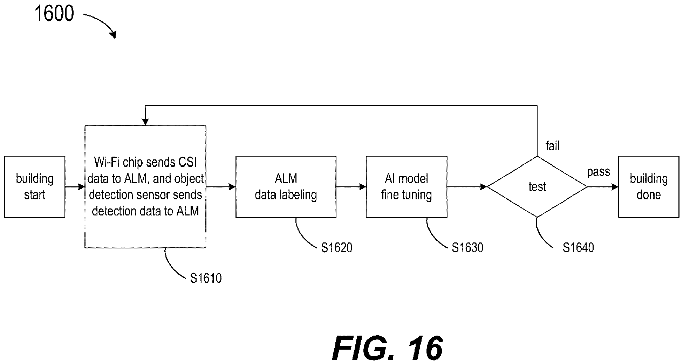

FIG. 16 shows a flow diagram of an exemplary process 1600 for developing or building an AI model according to some embodiments of the present disclosure. Aspects of the process 1600 can be implemented by an application of an automated labeling system, e.g., the induction lamp 1500. For example, in the process 1600, the Wi-Fi chip 340 can emit wireless signals (e.g., CSI data) in an induction range, the infrared/sound sensor/photoresistor 1530 can detect any object that enters and any sound that is made in the induction range and generate detection data as ground truth, and the ALM 310 can receive the CSI data and the detection data (at step S1610); and the ALM 310 can label the CSI data received from the Wi-Fi chip 340 with the detection data received from the infrared/sound sensor/photoresistor 1530 and generate labeled training data (at step S1620). The labeled training data can be stored in the training database 320, and be used to train the AI model 390 (at step S1630). The trained AI model 390 can be tested (at step S1640) to determine if it is trained or tuned well enough to make accurate predictions. For example, the trained AI model 390 can be tested with test data, which can also be obtained at steps S1610 and S1620, for example. If the trained AI model 390 passes the test, the building is done; otherwise, it needs to be modified and retrained with newly collected and labeled CSI data from the ALM 310 (at steps S1610 and S1620). Preferably, the user interface 350 can receive a user's feedback (or input) to trigger the ALM 310 and/or the infrared/sound sensor/photoresistor 1530, and the Wi-Fi chip 340 to perform step S1620 and/or step S1610, respectively.

Preferably, the AI model 390 thus trained with the labeled training data, which may be performed in a cloud server or an edge device, for example, can be used in combination with the Wi-Fi chip 340 to make prediction on newly received CSI data that correspond to whether there is any object entering a surveillance zone, recognition of a user's hand or finger gestures, *etc.* Preferably, the AI model 390 thus trained can be used in combination with these ground truth providing devices 330.

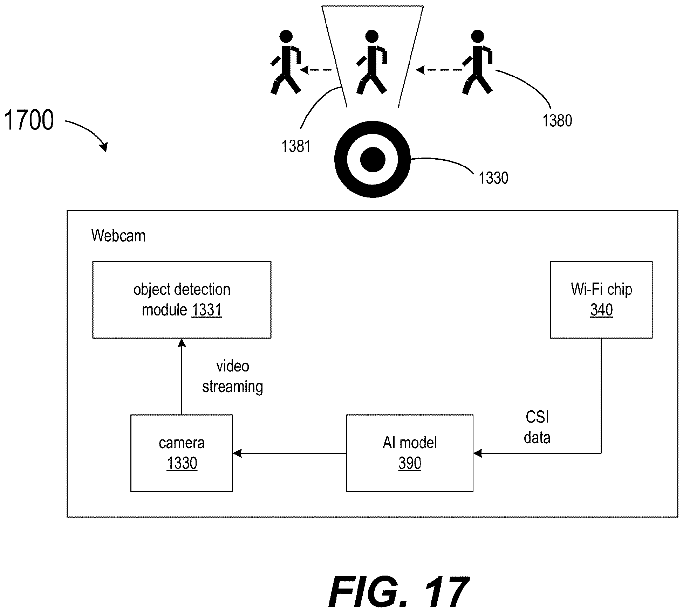

FIG. 17 shows a functional block diagram of a seventh application, e.g., a Webcam 1700, of an automated labeling system, e.g., the automated labeling system 300, according to some embodiments of the present disclosure. The Webcam 1700 can also include the camera 1330, the object detection module 1331 and the Wi-Fi chip 340. Preferably, the Webcam 1700 can further include the AI model 390, which is well trained with the labeled training data generated by the ALM 310 (shown in FIG. 13). Preferably, the AI model 390, when predicting on newly received CSI data that may indicate that there is an object 1380 entering the surveillance zone 1381, can trigger the camera 1330 to capture images of the surveillance zone 1381 and the object detection module 1331 to determine whether there is really an object 1380 entering the surveillance zone 1381.

While aspects of the present disclosure have been described in conjunction with the specific embodiments thereof that are proposed as examples, alternatives, modifications, and variations to the examples may be made. Accordingly, embodiments as set forth herein are intended to be illustrative and not limiting. There are changes that may be made without departing from the scope of the claims set forth below.

## Claims

1. A automated labeling system (300), comprising:
an automated labeling module, in the following also referred to as ALM, (310) configured to receive wireless signals and ground truth of learning object and label the wireless signals with the ground truth when receiving the ground truth to generate labeled training data; and
a training database (320) coupled to the ALM (310), the training database (320) configured to store the labeled training data.

2. The automated labeling system (300) of claim 1, wherein the wireless signals include Wi-Fi signals.

3. The automated labeling system (300) of claim 2, wherein the Wi-Fi signals include channel state information, in the following also referred to as CSI, signals.

4. The automated labeling system (300) of any one of claims 1 to 3, further comprising:
an artificial intelligence, in the following also referred to as Al, model (390) that is trained with the labeled training data, the trained AI model (390) configured to make prediction on wireless signals that are newly received.

5. The automated labeling system (300) of claim 4, wherein the AI model (390) is trained by a cloud server or a device that includes the automated labeling system (300).

6. The automated labeling system (300) of claim 4 or 5, further comprising:
a ground truth providing device (330) coupled to the ALM (310), the ground truth providing device (330) configured to provide the ground truth to the ALM (310).

7. The automated labeling system (300) of claim 6, wherein the trained AI model (390) is further configured to control an operation of the ground truth providing device (330).

8. The automated labeling system (300) of claim 6 or 7, wherein the ground truth providing device (330) includes a camera (530) and a gesture recognition module (531) coupled to the camera (530) and the ALM (310), the camera (530) configured to capture images that indicate a user's gestures, the gesture recognition module (531) configured to interpret the captured image as commands and send gesture category of the interpreted gestures to the ALM (310) as the ground truth.

9. The automated labeling system (300) of claim 8, being included in a virtual reality device (500).

10. The automated labeling system (300) of claim 6 or 7, wherein the ground truth providing device (330) includes an inertial measurement unit, in the following also referred to as IMU, sensor (730) and a gesture recognition module (731) coupled to the IMU sensor (730) and the ALM (310), the IMU sensor (730) configured to measure and report a body's movements and send IMU data to the gesture recognition module (731), the gesture recognition module (731) configured to interpret the body's movements based on the IMU data and send gesture category of the body's movements to the ALM (310) as the ground truth; and
preferably being included in a gesture-controllable TV (700).

11. The automated labeling system (300) of claim 6 or 7, wherein the ground truth providing device (330) includes a Bluetooth, in the following also referred to as BT, signal source (930) and at least one beacon (931) coupled to the BT signal source (930) and the ALM (310), the beacon (931) configured to broadcast its identifier, to determine range data based on BT received signal strength indicator, in the following also referred to as RSSI, signals from the BT signal source (930) and send the range data to the ALM (310) as the ground truth; and
preferably being applied to voice activity detection (900).

12. The automated labeling system (300) of claim 6 or 7, wherein the ground truth providing device (330) includes at least one beacon (1033), a BT chip (1030), and an indoor positioning module (1131) coupled to the BT chip (1030) and the ALM (310), the beacon (1031) configured to broadcast its identifier, the BT chip (1030) configured to measure an amplitude of a BT RSSI signal of the identifier and generate and send location data to the ALM (310) as the ground truth; and
preferably being included in a smart phone (1100).

13. The automated labeling system (300) of claim 6 or 7, wherein the ground truth providing device (330) includes a camera (1330) and an object detection module (1331) coupled to the camera (1330) and the ALM (310), the camera (1330) configured to capture images of a surveillance zone, the object detection module (1331) configured to analyze the captured images and send a detection result to the ALM (310) as the ground truth, the detection result indicating whether an object enters the surveillance zone; and
preferably being included in a Webcam (1300) or a light bulb camera.

14. The automated labeling system (300) of claim 6 or 7, wherein the ground truth providing device (330) includes an induction module (1530) coupled to the ALM (310), the induction module (1530) configured to detect an event and generate and send detection data to the ALM (310) as the ground truth.

15. The automated labeling system (300) of claim 14, wherein the induction module (1530) includes an infrared, a sound sensor and/or a photoresistor, and the event includes an object entering an induction range of the induction module (1530) and/or a sound being made in the induction range; and
preferably being included in an induction lamp (1500).
